# EUROPEAN PATENT APPLICATION

(11) **EP 1 631 008 A1**
(43) Date of publication of application: **01.03.2006**
(21) Application number: 04733913.0
(22) Date of filing: 19.05.2004
(51) Int. Cl.: H04L 12/28

(54) **PROVISION OF SERVICES TO CLIENTS BY USE OF RADIO COMMUNICATION**

(30) Priority: 21.05.2003 JP 2003142923
(71) Applicant: International Business Machines Corporation, Armonk, N.Y. 10504 (US)
(72) Inventor: ITOH, Satoshi, c/o Yamato site, Yamato-shi, Kanagawa 242-8502 (JP); TSUKAMOTO, Yasushi, c/o Yamato site, Yamato-shi, Kanagawa 242-8502 (JP)
(74) Representative: Sekar, Anita
(86) International application number: PCT/JP2004/006727
(87) International publication number: WO 2004/105324

(57) **Abstract**

When a function as an access point to a network is provided to a client using communication means for conducting wireless communication with the client according to a predetermined protocol, a client that exists within a range in which communication is possible is detected by sending a predetermined broadcast packet by the communication means and receiving a response packet containing identification information of a client responding to the broadcast packet (steps 31-33), and connection information required to establish a connection with the network is sent to the detected client by the communication means (steps 35-37).

## Description

### Technical Field

The present invention relates to an information processing apparatus for establishing a connection with a client according to a protocol using wireless communication such as Bluetooth and providing the client with an access point to a network; a client for which the access point is thereby provided; a wireless system, location detection system, and explanation system using the information processing apparatus and client; a program used therefor; and an access point providing method, network connection method, wireless system operation method, location detection method, and explanation method that can be applied to the information processing apparatus, client, wireless system, location detection system, and explanation system.

### Background Art

One of known protocols for wireless data communication is Bluetooth. Bluetooth enables various devices to be easily connected with each other over obstructions without using interface cables or the like as long as those devices are at a predetermined short distance from each other.

A system utilizing such Bluetooth is known in which a Bluetooth-enabled device is installed in a store, and when a user carrying a Bluetooth-enabled digital camera enters a range in which the device can communicate, the device automatically connects to the digital camera and transmits it identity information of the store, etc. (see patent document 1). The identity information of the store transmitted to the camera can then be utilized to visit a corresponding WWW site of the store, for example. This enables efficient marketing to users who visit the store.

In such a conventional Bluetooth system, a client may be connected to a server on a network in accordance with the following procedure. That is, the server is set in advance so that it can be detected by all clients through device detection, or alternatively, so that it can be detected through device detection by clients belonging to a specific group. With the server being set in this manner, clients carry out device detection according to users' directions. Device detection in such a case is an operation that obtains information identifying a Bluetooth device from that device existing within a range in which communication is possible according to an inquiry procedure defined in the Bluetooth specification. Then, services provided by a detected device are determined, and a physical link is established with a server that provides a LAN service. Over the physical link, the client can access a LAN.

### Patent Document 1: Japanese Published Patent Application 2002-230396

In such a conventional procedure for network connection, however, a client need to detect a server that exists in a range in which wireless communication is possible when it wants to connect to a network. That is, because settings have to be made depending on the detected server, presetting for a server to which one wants to connect cannot be done. Thus, even a user inexperienced in network settings is inevitably required to make various settings each time the user wants to connect to a network.

Also, for a client to detect a server, the server need to be set so that it can be detected by all devices, or alternatively, to be set in a manner that enables it to be detected by clients belonging to a specific one of device groups that categorize devices by types such as personal computer, PDA, etc. Such settings permit accesses by many and unspecified users, which, thus, lead to security problems and the risk of unlimited access to the network.

These problems could be solved by selecting users in advance and carrying out user management. In that case, however, connection under control is possible only after a process in which a client to be managed is positioned at a distance from a server that actually allows handshaking via Bluetooth, the server is detected by the client, a connection is established therebetween, and then the client is registered with the server. This approach requires as many actual registering operations as the number of clients to be managed and, thus, is not feasible if there are a large number of clients to be managed.

### Disclosure of Invention

### Problems to Be Solved by the Invention

In view of such problems in prior art, an object of the invention is to facilitate management of clients that are permitted to access a network when a client is connected to the network using a server on the network as a wireless access point. Another object of the invention is to facilitate a network connection.

### Means for Solving the Problems

To achieve these objects, in the information processing apparatus and access point providing method of the invention, when a connection with a client is made according to a predetermined protocol using wireless communication and an access point to a network is provided to the client, a client that exists within a range in which wireless communication is possible is detected by sending a predetermined broadcast packet and receiving from the responding client a response packet containing information identifying the client, and connection information necessary to establish a connection with a network is sent to the detected client.

Also, in the client and network connection method of the invention, when a connection with an information processing apparatus is made according to a predetermined protocol using wireless communication and an access point to a network is provided by the information processing apparatus, a client can be detected by the information processing apparatus when the client is located within a range in which wireless communication is possible by receiving a predetermined broadcast packet sent by the information processing apparatus and sending back a response packet containing information that identifies the client, and a network connection is established based connection information that is sent from the information processing apparatus upon detection of the client.

The wireless system of the invention is characterized in that it includes the above-mentioned information processing apparatus and client according to the invention. Also, the wireless system operation method of the invention connects a client to a network using the access point providing method and network connection method of the invention mentioned above. The program of the invention is characterized in that it causes a computer to function as the information processing apparatus, client, or wireless system of the invention mentioned above.

In each of these aspects of the invention, the predetermined protocol may be Bluetooth, for example. Detection of a client can be carried out in accordance with an inquiry procedure defined in the Bluetooth specification, for example. The connection information can be sent by means of "push", which distributes information automatically. Such push distribution may be performed in accordance with Object Push Profile defined in the Bluetooth specification, for example. Connection to the network may be established through establishment of a connection with an access point according to the PPP protocol complying with the LAN access profile of the Bluetooth specification and establishment of a connection with the network according to the higher TCP/IP protocol. The client may be a PDA (Personal Digital Assistant), mobile phone, PHS or the like that can support the predetermined protocol. The information processing apparatus may be a notebook PC or desktop PC that can support the predetermined protocol.

In such a configuration, when the information processing apparatus is sending the broadcast packet at a certain interval to detect a client, the client receives the broadcast packet and returns the response packet upon entering an area within which communication is possible. The client is thus detected by the information processing apparatus. Since the response packet contains identification information of the client, upon receiving it, the information processing apparatus can send connection information necessary to establish a network connection to the client. Based on the information, the client can establish a network connection.

The above client detection procedure is reverse to the conventional procedure that detects information processing apparatuses from a client side. That is, the conventional procedure detects information processing apparatuses from a client side and selects an information processing apparatus for connection, while the invention detects clients from an information processing apparatus side and permits a selected client to be connected. Thus, according to the invention, since it is not necessary to detect the information processing apparatus by the client, the information processing apparatus can be set so that the client side is not permitted to detect the information processing apparatus.

Also, the invention can prevent unauthorized clients from connecting to a network, by determining whether or not a detected client is recorded in a file recording clients that are authorized to connect to the network and sending connection information to the client only if the client is recorded in the file. This can facilitate management of clients which are permitted network connection without necessity to position a client within a range in which an information processing apparatus can communicate, and register the client in advance as has been practiced.

A client that has received the connection information necessary to establish a network connection can establish a network connection based on the information without troubling a user. If the client has a shared directory for storing connection information received, the shared directory is monitored, and if connection information is present in the directory, a network connection is established in accordance with the information. Then, the directory is emptied. On the other hand, if the client does not have a program for handling such connection information, establishment of a network connection is difficult. This can also prevent unlimited access to a network.

In the preferred embodiment of the wireless system and wireless system operation method of the invention, when a client has established a network connection, a server connected to the network can display information on a display device that is associated with the client or based on a request from the client. The information associated with the client may represent, for example, what information the client requested at the time of previous access to the server by the client, or what information the server provided to the client. It may be a cookie that was sent to the client at the time of previous access.

Thus, when a user carrying the client has approached an access point and established a network connection, the server can extract information meeting user's preference and display the information on a display device. In addition, the user can display desired information on the display device by operating the client. It is possible to provide more information to the user without difficulty by using a display device with a large screen such as a PDP.

The invention may be applied to location detection of a user who carries a client, or explanations at places of scenic beauty and historic interest. In the case of the location detection, the information processing apparatus and client of the invention, and a server that is connected to a network to which the client connects via the information processing apparatus are used, in which the information processing apparatus detects the client and sends connection information to the client, then, the client establishes a connection to the network based on the connection information and sends to the server its identification information and that of the information processing apparatus that is providing the access point to the network. The server stores in advance information for location detection that includes location information of the information processing apparatus associated with its identification information, and locates the client based on the identification information received and the information for location detection.

In the case of explaining, the client sends to the server its identification information and that of the information processing apparatus that is providing the access point to the network after establishing a network connection in the same way as the above. The server stores in advance explanatory information that includes the identification information of the information processing apparatus associated with corresponding information for explanation, and sends the corresponding information for explanation to the client based on the identification information received and the explanatory information, and the client outputs the explanation as sound or image based on the explanatory information received.

### Best Mode for Carrying Out the Invention

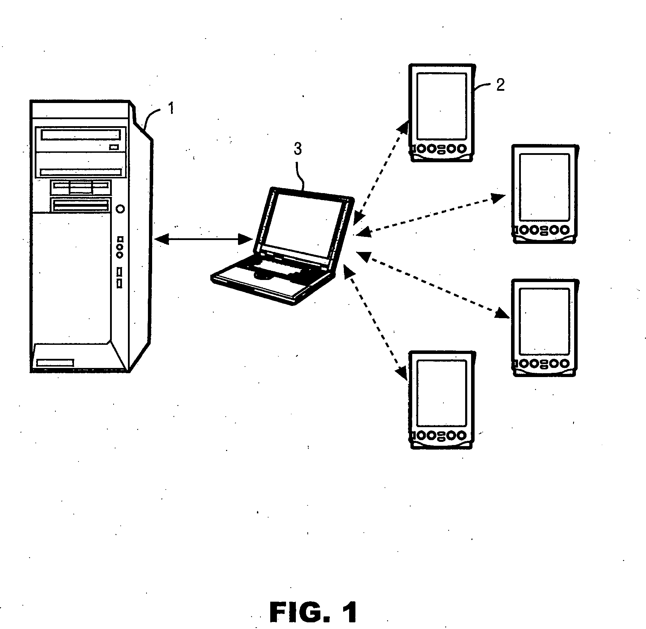

Figure 1 shows a Bluetooth wireless system according to an embodiment of the invention. The system includes a server 1, clients 2 which receive various kinds of information from the server 1, and a notebook PC 3 that lies between the server 1 and the clients 2 and acts as an access point. The client 2 may be a PDA (Personal Digital Assistant) or the like. The server 1 and the notebook PC 3 are connected over an Ethernet® to enable both-way communication using TCP/IP. Each of the notebook PC 3 and clients 2 has a Bluetooth module including wireless modulation and baseband units to establish a link using Bluetooth. Also, the Object Push Profile and LAN Access Profile defined in the Bluetooth specification are supported.

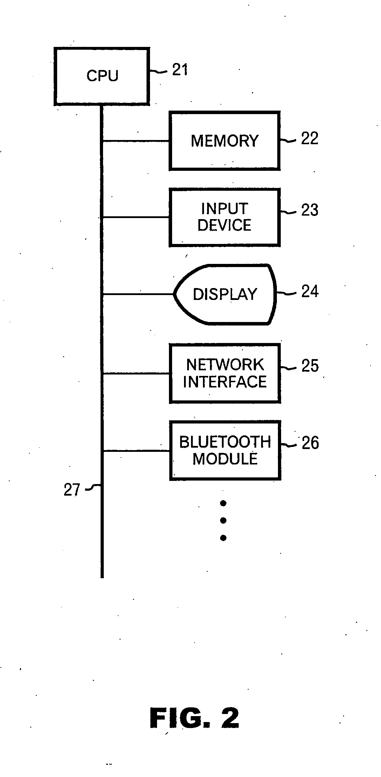

Figure 2 shows a block diagram illustrating main components of the notebook PC 3. As shown, the notebook PC 3 includes a CPU 21 for performing data processing and controlling each portion in accordance with programs, a memory 22 for storing various programs and data, an input device 23 for performing input operations, a display device 24 that displays data processing results from the CPU 21 and acts as a GUI (Graphical User Interface), a network interface 25 for connecting to a network, a Bluetooth module 26 including modulation and baseband units to enable communication according to the Bluetooth protocol, and a bus 27 connecting these components.

The memory 22 may be a ROM, RAM, and/or hard disk drive, and stores an OS, various application programs, Bluetooth protocol stack, etc. The application programs include a program that causes the notebook PC 3 to act as a Bluetooth access point. The memory 22 also stores a list of Bluetooth device addresses of clients 2 that are permitted to connect to a network. A Bluetooth device address is given to each Bluetooth device for uniquely identifying it.

While the server 1 and clients 2 have configuration similar to that of the notebook PC 3, the server 1 does not need the Bluetooth module 26 and the clients 2 do not need the network interface 25.

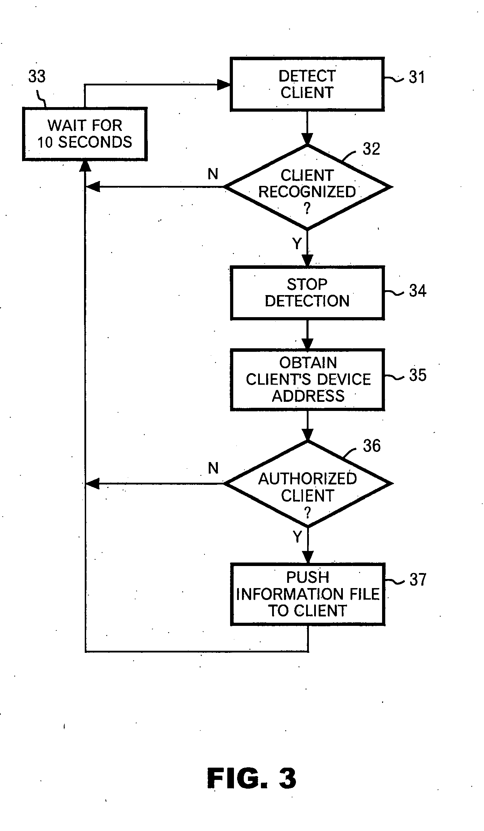

Figure 3 is a flowchart illustrating a processing procedure in the notebook PC 3 when a client 2 establishes a network connection. To establish a connection, the notebook PC 3 detects the client 2 in the present embodiment, while the conventional procedure detects the notebook PC 3 from the client 2 side. For the client 2 to establish a Bluetooth link with the notebook PC 3 and conduct a network connection, it is necessary that the client 2 is in a discoverable mode enabling it to be detected, a file transfer function complying with the Object Push Profile is enabled, and a LAN connection service is available.

In establishing a network connection, device detection is first performed at step 31 to collect information on clients 2 that exist within a range in which communication is possible. The device detection is performed in accordance with a Bluetooth device inquiry procedure by sending broadcast packets containing IAC (Inquiry Access Code) at regular intervals. The broadcast packet may contain GIAC (General/Unlimited Inquiry Access Code) code indicating that all Bluetooth devices are to be inquired, or DIAC (Device-Specific Inquiry Access Code) code indicating that only Bluetooth devices of a particular type are to be inquired. In the present embodiment, the DIAC code that limits the target of inquiry to PDAs is used.

Then, at step 32, a determination is made as to whether a client 2 has been recognized by receiving a response packet sent from the client 2 in response to the broadcast packet. The response packet contains the Bluetooth device address of the responding client 2. If it is determined that no client 2 has been recognized, the process waits at step 33 for about 10 seconds and returns to step 31 to perform the device detection again. Thus, the device detection is repeated at an interval of about 10 seconds until a client 2 enters a range in which communication is possible, and responds.

If it is determined at step 32 that a client 2 has been recognized, the process proceeds to step 34 to stop the device detection. Then, at step 35, the Bluetooth device address of the client 2 contained in the response packet is obtained.

Then, at step 36, a determination is made as to whether or not an address matching the obtained Bluetooth device address is contained in the list of Bluetooth device addresses of clients 2 that are permitted to connect to the network. If a matching address is contained in the list, the process proceeds to step 37, where an information file containing information necessary for establishing a network connection is pushed to the detected client 2 in accordance with the Obj ect Push Profile. The pushed information file will be stored in a shared directory of the client 2.

When the processing at step 37 is completed, the process again waits at step 33 for 10 seconds and returns to step 31 to continue the device detection.

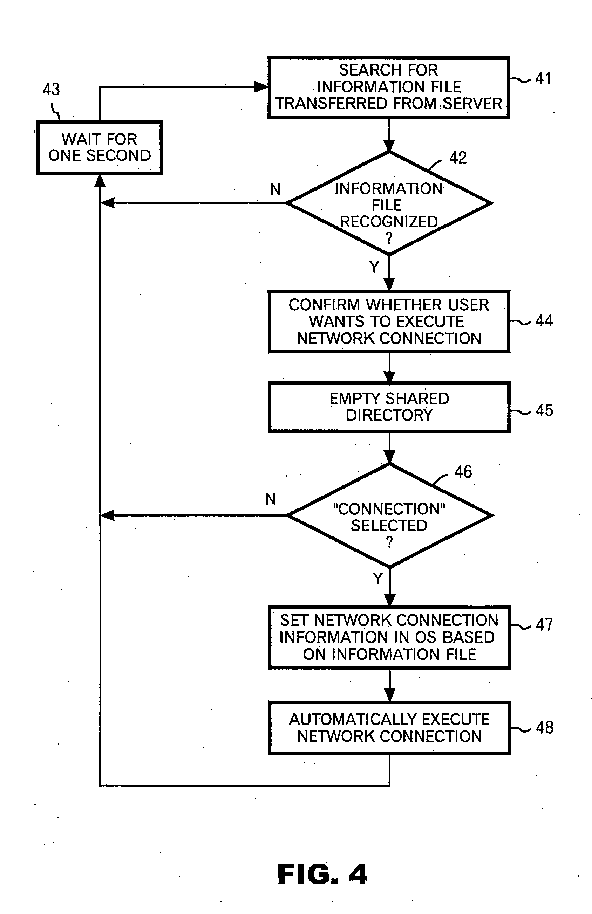

Figure 4 is a flowchart illustrating a processing procedure in the client 2 when establishing a network connection. First, at step 41, the shared directory is searched for the information file transferred from the notebook PC 3, and at step 42, a determination is made as to whether or not the information file has been recognized. If it is determined the information file has not been recognized, the process waits at step 43 for about one second and returns to step 41 to search for the information file again. In this manner, push of the information file is continuously monitored.

If it is determined at step 42 that the information file has been recognized in the shared directory, the process proceeds to step 44 where the user is prompted to confirm whether or not a network connection is executed. After emptying the shared directory at step 45, a determination is made at step 46 as to whether or not execution of a network connection has been selected. If it is determined that execution of a network connection has not been selected, the process waits at step 43 for about one second and returns to step 41, where a search for the information file is performed again. The operation of emptying the shared directory is done by moving the information file to another location or by deleting it.

If it is determined at step 46 that execution of a network connection has been selected, network connection information in the OS is set in accordance with the information file at step 47, and a network connection is executed at step 48. That is, a link with the notebook PC 3 is formed in accordance with the LAN Access Profile of the Bluetooth specification, and a connection to the network using the notebook PC 3 as an access point is established. This sets up an environment for connection to the Internet or an intranet for the client 2. After the network connection is completed, the process returns to step 41 via step 43.

According to the present embodiment, unlimited network access by the client 2 can be prevented because the notebook PC 3 detects the client 2 as opposed to the conventional procedure. That is, in the latter, the notebook PC 3 is set to be detectable and the client 2 performs device detection, thus the Bluetooth device address of the notebook PC 3 is sent to the client 2 upon detection and the client 2 can conduct network connection with no limitation. In contrast, in the present embodiment, the notebook PC 3 is set to be undetectable and detection is performed from the side of the notebook PC 3, thus no client 2 can detect the notebook PC 3. Also, the notebook PC 3 pushes its Bluetooth device address to a client 2 to permit a network connection only if the Bluetooth device address of the client 2 obtained by the device detection exists in the list of Bluetooth device addresses of the clients 2 that have been permitted to connect to the network.

In addition, according to the present embodiment, the client 2 automatically establishes a network connection based on information pushed by the notebook PC 3, thus it is possible to eliminate time and trouble for a user to make settings for establishing a network connection at the client 2.

The client 2 needs to have a program for processing an information file pushed by the notebook PC and establishing a network connection. That is, any client 2 without such a program cannot establish a network connection. Unlimited network access can be avoided in that respect as well.

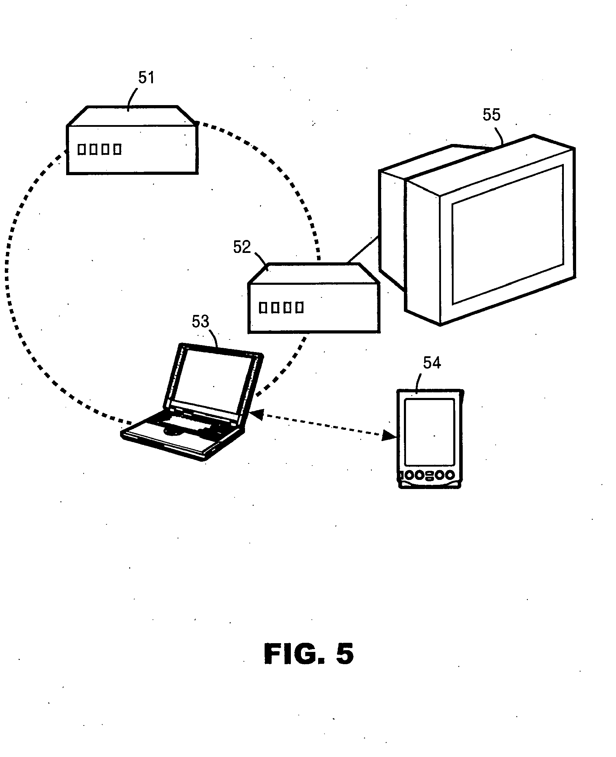

Figure 5 shows an Internet cafe system according to another embodiment of the invention. This system includes Web servers 51 and 52 that are connected to the Internet, a notebook PC 53, and a PDA 54 carried by a user. A PDP (Plasma Display Panel) 55 is connected to each of the servers 51 and 52, and the PDP 55 connected to the server 52 is installed outside a store so that customers in front of the store can view it readily. The servers 51 and 52, notebook PC 53, and PDA 54 have the same configurations as the server 1, notebook PC 3, and client 2 in the above-mentioned embodiment, respectively.

When a customer carrying the PDA 54 comes in front of the store, the notebook PC 53 detects the PDA 54 that has been set to be detectable by the device detection in accordance with the same procedure as that shown in Figure 3, and pushes an information file containing information necessary for establishing a network connection to the PDA 54 on the condition that the PDA 54 is permitted to connect to a network. The information contains an access point name (Bluetooth device name of the notebook PC 53), a hardware address of the access point (Bluetooth device address of the notebook PC 53), and a BMP file to be displayed.

In accordance with the pushed information, the PDA 54 establishes a network connection using the same procedure as that shown in Figure 4. At that time, the BMP file is displayed on the display device of the PDA 54. The PDA 54 can thereby access the Internet and perform both-way communication with the server 51 or 52.

Subsequently, application programs of the PDA 54 and server 52 can communicate with each other, and the server 52 can select appropriate information and data to be displayed based on information that was recorded in association with the Bluetooth device address of the PDA 54 when the PDA 54 previously accessed the server 52, and display them on the PDP 55 or push them to the PDA 54. Also, the PDA 54 can send a request based on an input operation to the server 52 to cause the server 52 to provide display on the PDP 55 according to the request.

The present embodiment can prevent unlimited access to the network via an access point in the store, and for customers passing by the store, can improve advertising effectiveness and customer service by pushing information meeting each customer's needs or displaying such information on the large screen PDP 55.

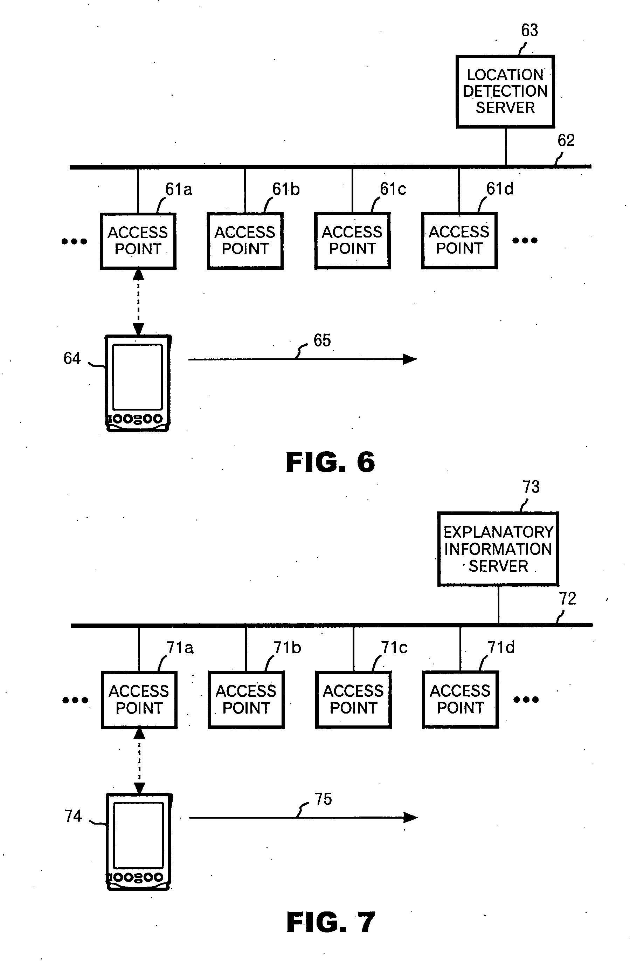

Figure 6 is a block diagram showing a location detection system according to yet another embodiment of the invention. The system includes information processing apparatuses 61 (61a- 61d, ...) that act as access points, a server 63 connected to the information processing apparatuses 61 over an Ethernet® 62, and a client 64 whose location can be detected. The information processing apparatuses 61, sever 63, and client 64 have the same configurations as the notebook PC 3, server 1, and client 2 shown in Figure 1, respectively. The server 63 stores information on locations of the respective information processing apparatuses 61 as location detection information in association with Bluetooth device addresses of the information processing apparatuses 61.

In this configuration, when a user carrying the client 64 passes through a communication range of the information processing apparatus 61a, the information processing apparatus 61a detects the client 64 using the procedure shown in Figure 3 and pushes connection information to the client 64. Then, following the procedure shown in Figure 4, the client 64 receives the connection information containing the Bluetooth device address of the information processing apparatus 61a and connects to the server 63 via the information processing apparatus 61a as an access point. Subsequently, a program of the client 64 sends its Bluetooth device address and that of the information processing apparatus 61a to a program of the server 63. Based on the Bluetooth device addresses and location detection information, the program of the server 63 can detect that the client 64 is located within the communication range of the information processing apparatus 61a.

As the user carrying the client 64 moves in the direction indicated by an arrow 65 to leave the communication range of the information processing apparatus 61a and enters that of the information processing apparatus 61b, the client 64 is detected to be within the communication range of the information processing apparatus 61b in the same procedure, this time via the information processing apparatus 61b. In this way, as the user moves in the direction of the arrow 65, the user's location is detected via the information processing apparatuses 61a-61d... sequentially.

Figure 7 is a block diagram showing a explanation system according to yet another embodiment of the invention. This system includes information processing apparatuses 71 (71a-71d, ...) that act as access points, a server 73 connected to the information processing apparatuses 71 over an Ethernet®
72, and a client 74 carried by a user. The information processing apparatuses 71, server 73, and client 74 have the same configurations as the notebook PC 3, server 1, and client 2 shown in Figure 1, respectively. The server 73 stores information on contents of explanations corresponding to the respective information processing apparatuses as explanatory information in association with the Bluetooth device addresses of the information processing apparatuses 71.

In this configuration, when the user carrying the client 74 enters a communication range of the information processing apparatus 71a, the information processing apparatus 71a detects the client 74 by the procedure shown in Figure 3 and pushes connection information to the client 74. Then, following the procedure shown in Figure 4, the client 74 receives the connection information containing the Bluetooth device address of the information processing apparatus 71a and connects to the server 73 using the information processing apparatus 71a as the access point. During this process, a confirmation message such as "Would you like to hear explanation?" may be displayed on a screen for confirming whether or not a network connection should be established at step 45 in Figure 4, and if the user selects to hear the explanation, a network connection is established subsequently.

After establishing the network connection, a program of the client 74 sends its Bluetooth device addresses and that of the information processing apparatus 71a to a program of the server 73. Based on the Bluetooth device addresses and explanatory information, the program of the server 73 sends information on the explanation corresponding to the information processing apparatus 71a to the client 74. Upon receiving the information, the program of the client 74 outputs the explanation as sounds or displays it on the screen based on the information.

When the user carrying the client 74 moves in the direction of the arrow 75 to leave the communication range of the information processing apparatus 71a and enters that of the information processing apparatus 71b, the client 74 can receive explanatory information corresponding to the information processing apparatus 71b, this time through the information processing apparatus 71b, by the same procedure as the above, and perform audible output or image display for the explanation. In this manner, as the user moves in the direction of the arrow 75, the client 74 can receive explanatory information via the information processing apparatuses 71a-71d... sequentially and provide the user with explanations corresponding to the information processing apparatuses 71a-71d....

A message for asking the user to select English or Japanese as a language used for explanation, or a message for selecting either a detailed explanation or a brief explanation may be displayed as confirmation message, and depending on the selection by the user, information to be provided to the client 74 by the server 73 may be dynamically changed.

The explanation system of the present embodiment can be applied to guidance at places of scenic beauty and historic interest, or explanation on exhibits at museums. In such a case, the information processing apparatuses 71 may be installed at spots where the explanation or guidance is available with visitors being provided with a client 74.

The invention is not limited to the embodiments described above and can be implemented with modification made thereto as appropriate. For example, while Bluetooth is used as a protocol for conducting wireless communication and establishing a network connection in the embodiments above, any protocol may be alternatively employed if it allows device detection from the server side and pushes information prior to the establishment of a network connection, like Bluetooth.

As has been described, according to the invention, device detection is performed from the side of information processing apparatuses and connection information necessary to establish a network connection is sent to a detected client, thus unlimited access to the network can be prevented. In addition, a network connection can be established based on the received connection information without troubling a user.

### Brief Description of Drawings

Figure 1 is a block diagram showing a Bluetooth wireless system according to an embodiment of the invention;
Figure 2 is a block diagram showing main components of a notebook PC in the system of Figure 1;
Figure 3 is a flowchart showing a processing procedure in a notebook PC when a client establishes a network connection in the system of Figure 1;
Figure 4 is a flowchart showing a processing procedure on a client when establishing a network connection in the system of Figure 1;
Figure 5 is a block diagram showing an Internet cafe system according to another embodiment of the invention;
Figure 6 is a block diagram showing a location detection system according to yet another embodiment of the invention; and
Figure 7 is a block diagram showing a explanation system according to yet another embodiment of the invention.

## Claims

1. An information processing apparatus that provides a client with a function as an access point to a network using communication means for conducting wireless communication with the client according to a predetermined protocol, said apparatus comprising:
client detection means for detecting a client within a range where communication is possible, by sending a predetermined broadcast packet and receiving a response packet containing identification information of a client responding thereto, by said communication means; and
connection information sending means for sending connection information required to establish a connection with said network to the detected client by said communication means.

2. The information processing apparatus according to Claim 1, wherein said protocol is Bluetooth, said detection is performed using an inquiry procedure, and said connection information is sent in accordance with Object Push Profile.

3. The information processing apparatus according to Claim 1, further comprising means for preventing said information processing apparatus from being detected by any client using a procedure in which the detecting and detected entities are replaced with each other in contract to said detection.

4. The information processing apparatus according to Claim 1, further comprising a file that records the identification information of clients which are permitted to connect to said network and means for determining whether or not said detected client is recorded in said file, wherein said connection information sending means sends said connection information only if said detected client is recorded in said file.

5. A client including communication means for conducting wireless communication with an information processing apparatus according to a predetermined protocol, said information processing apparatus providing said client with a function as an access point to a network, via said wireless communication, said client comprising:
response means for receiving a predetermined broadcast packet sent from said information processing apparatus by said communication means and sending a response packet containing information that identifies the client by said communication means, to thereby allow the client to be detected by said information processing apparatus when the client is located within a range where communication is possible; and
connection establishment means for establishing a connection with said network based on connection information required to establish a connection with said network that is sent to the client by said information processing apparatus when the client is detected.

6. The client according to Claim 5, wherein said protocol is Bluetooth, said detection is performed using an inquiry procedure, and said connection information is sent in accordance with Object Push Profile.

7. The client according to Claim 5, further comprising a directory for storing connection information sent to said client, wherein said connection establishment means monitors said shared directory, and if said connection information exists in said shared directory, it empties said shared directory and establishes said connection based on said connection information.

8. A wireless system comprising an information processing apparatus according to any of Clams 1 to 4 and a client according to Claim 5 or 6.

9. The wireless system according to Claim 8, further comprising a server connected to a network to which said client connects via said information processing apparatus, and a display device connected to said server, wherein said server comprises means for, when said client has established a connection to said network, causing information associated with said client that has established the connection or information based on a request from said client to be displayed on said display device.

10. A wireless system including a Bluetooth server and a Bluetooth client that are capable of wireless connection through Bluetooth,
wherein the Bluetooth server is connected to an Ethernet®-based network and comprises:
detection means for detecting a Bluetooth client that is located within a range where the wireless connection is possible by sending a broadcast packet and receiving a response packet in accordance with an inquiry procedure; and
means for pushing connection information required to establish a connection with said network in accordance with Object Push Profile to a Bluetooth client that is permitted to connect to said network among those detected, and
the Bluetooth client comprises:
response means for monitoring whether said broadcast packet is being sent or not in accordance with said inquiry procedure and, on receipt of said broadcast packet, sending a response packet containing identification information that identifies itself; and
means for establishing said network connection based on said pushed connection information.

11. The wireless system according to Claim 10, further comprising an information display server connected to said network, and a panel display connected to said information display server and installed outdoors, wherein said information display server comprises means for causing information associated with the Bluetooth client for which said network connection has been established or information corresponding to a request from said Bluetooth client to be displayed on said panel display.

12. A location detection system that comprises an information processing apparatus according to any of Claims 1 to 4, a client according to any of Claims 5 to 7, and a server that is connected to a network to which said client connects via said information processing apparatus, wherein said client comprises means for sending to said server its identification information and identification information of said information processing apparatus that is providing an access point to said network, and said server comprises means for storing location detecting information that has the location and identification information of said information processing apparatus associated with each other, and means for determining the location of said client based on said identification information received and said location detecting information.

13. A explanation system comprising an information processing apparatus according to any of Claims 1 to 4, a client according to any of Claims 5 to 7, and a server that is connected to a network to which said client connects via said information processing apparatus, wherein said client comprises means for sending to said server its identification information and identification information of said information processing apparatus that is providing an access point to said network, and said server comprises means for storing explanatory information that has the identification information of said information processing apparatus and corresponding information for explanation associated with each other, and means for sending the corresponding information for explanation to said client based on said identification information received and said explanatory information.

14. A program causing an information processing apparatus according to any of Claims 1 to 4, a client according to any of Claims 5 to 7, or a system according to any of Claims 8 to 13 to function as each of the means that constitute it.

15. A method for providing an access point by means of an information processing apparatus that provides a client with a function as an access point to a network using communication means for conducting wireless communication with a client according to a predetermined protocol, said method comprising:
a client detection procedure performed by said information processing apparatus to detect a client within a range where communication is possible, by sending a predetermined broadcast packet and receiving a response packet containing identification information of a client responding thereto, by said communication means; and
a connection information sending procedure performed by said information processing apparatus to send connection information required to establish a connection with said network to the detected client by said communication means.

16. The method for providing an access point according to Claim 15, wherein said protocol is Bluetooth, said detection is performed using an inquiry procedure, and said connection information is sent in accordance with Object Push Profile.

17. The method for providing an access point according to Claim 15, further comprising a procedure for preventing said information processing apparatus from being detected by clients using a procedure in which the detecting and detected entities are replaced with each other in contrast to said detection.

18. The method for providing an access point according to Claim 15, further comprising a procedure performed by said information processing apparatus to determine whether or not a client detected in said detection procedure is permitted to connect to said network based on a file that records the identification information of clients that are permitted to connect to said network, wherein in said connection information sending procedure, said connection information is sent only if said detected client is permitted to connect to said network.

19. A method of network connection by a client including communication means for conducting wireless communication with an information processing apparatus according to a predetermined protocol and provided with a function as an access point to a network by said information processing apparatus via said wireless communication, said method comprising:
a response procedure performed by client to receive a predetermined broadcast packet sent from said information processing apparatus and send a response packet containing identification information that identifies the client, by said communication means, to thereby allow the client to be detected by said information processing apparatus when the client is located within a range where communication is possible; and
a connection establishing procedure performed by said client to establish a connection with said network based on connection information required to establish a connection with said network that is sent by said information processing apparatus to the client when the client is detected.

20. The method of network connection according to Claim 19,
wherein said protocol is Bluetooth, said detection is performed using an inquiry procedure, and said connection information is sent in accordance with Object Push Profile.

21. The method of network connection according to Claim 19,
wherein said client comprises a shared directory for storing said connection information received, and said connection establishment procedure monitors said shared directory, and empties said shared directory and establishes said connection based on said connection information if said connection information exists in said shared directory.

22. A method for operating a wireless system, comprising a procedure of connecting a client to a network using the access point providing method according to any of Claims 15 to 18 and the method of network connection according to any of Claims 19 to 21.

23. The method for operating a wireless system according to Claim 22, wherein when a network connection for said client has been established, a server connected to said network causes information associated with the client that has established the connection or information based on a request from the client to be displayed on a display device connected to said server.

24. A method for operating a wireless system, comprising:
a procedure of preparing a Bluetooth server and a Bluetooth client that are capable of wireless connection through Bluetooth;
a procedure of connecting the Bluetooth server to an Ethernet®-based network;
a procedure performed by the Bluetooth server to detect a Bluetooth client that is located within a range where the wireless connection is possible, by sending a broadcast packet and receiving a response packet in accordance with an inquiry procedure;
a procedure performed by the Bluetooth server to push connection information required to establish a connection with said network in accordance with Object Push Profile to a Bluetooth client that is permitted to connect to said network among those detected;
a procedure performed by the Bluetooth client to monitor whether said broadcast packet is being sent or not in accordance with said inquiry procedure and, upon receiving a broadcast packet, send a response packet containing identification information that identifies itself; and
a procedure performed by the Bluetooth client to establish said network connection based on said pushed connection information.

25. The method for operating a wireless system according to Claim 24, further comprising a procedure of connecting an information display server to said network, a procedure of connecting a panel display installed outdoors to said information display server, and a procedure performed by said information display server to display on said panel display information associated with the Bluetooth client for which said network connection has been established or information corresponding to a request from said Bluetooth client.

26. A method for detecting a location, comprising:
a procedure of preparing an information processing apparatus according to any of Claims 1 to 4, a client according to any of Claims 5 to 7, and a server connected to a network to which said client connects via said information processing apparatus;
a procedure performed by said information processing apparatus to detect said client and send connection information to said client;
a procedure performed by said client to establish a connection to said network based on said connection information received;
a procedure performed by said client to send to said server its identification information and identification information of said information processing apparatus that is providing the access point to said network;
a procedure performed by said server to store location detection information that has the location and identification information of said information processing apparatus associated with each other; and
a procedure performed by said server to determine the location of said client based on said identification information received and said location detection information.

27. An explanation method, comprising:
a procedure of preparing an information processing apparatus according to any of Claims 1 to 4, a client according to any of Claims 5 to 7, and a server connected to a network to which said client connects via said information processing apparatus;
a procedure performed by said information processing apparatus to detect said client and send connection information to said client;
a procedure performed by said client to establish a connection to said network based on said connection information received;
a procedure performed by said client to send to said server its identification information and identification information of said information processing apparatus that is providing the access point to said network;
a procedure performed by said server to store explanatory information that has the identification information of said information processing apparatus and information on a corresponding explanation associated with each other;
a procedure performed by said server to send the information on a corresponding explanation to said client based on said identification information received and said explanatory information; and
a procedure performed by said client to conduct output based on said information on the explanation received.
